# FASCICULE DE BREVET EUROPEEN

(11) **EP 1 468 605 B1**
(45) Date de publication et mention de la délivrance du brevet: **30.06.2010**
(21) Numéro de dépôt: 04290922.6
(22) Date de dépôt: 07.04.2004
(51) Int. Cl.: A01M 7/00

(54) **Rampe de pulvérisation**
Spritzgestänge
Spray boom

(30) Priorité: 07.04.2003 FR 0304272
(43) Date de publication de la demande: 20.10.2004
(73) Titulaire: CENTRE NATIONAL DU MACHINISME AGRICOLE DU GENIE RURAL DES EAUX ET DES FORETS (CEMAGREF), 92160 Antony (FR)
(72) Inventeur: Roux, Philippe, 34270 Saint Mathieu de Tréviers (FR); Bonicel, Jean-François, 34090 Montpellier (FR)
(74) Mandataire: Fosse, Danièle

(56) Documents cités:
- EP-A- 0 326 045
- EP-A- 0 357 154
- FR-A- 2 562 445
- US-A- 927 315
- US-A- 5 176 322
- US-A- 5 680 991

## Description

La présente invention concerne une rampe de pulvérisation agricole comprenant au moins un bras, chaque bras présentant au moins un tronçon de structure monopoutre.

Les pulvérisateurs agricoles sont destinés à l'application de produits phytosanitaires sur des végétaux. Ils sont de type porté, tracté ou automoteur et sont généralement constitués d'un châssis porteur, d'une cuve contenant les produits à pulvériser, d'une rampe qui s'étend transversalement à la direction d'avancement de l'engin en utilisation et portant un dispositif de pulvérisation comprenant des buses réparties sur la rampe, un ensemble de conduites qui relient le réservoir et les buses ainsi qu'une pompe destinée à faire circuler le produit.

De manière classique, la rampe comporte deux bras, de part et d'autre de l'axe d'avancement de l'engin porteur, constitués chacun d'un ou plusieurs tronçons de poutre réalisés le plus souvent suivant un type de construction dit « en treillis simple » ou « en treillis composé ». On rapporte ensuite les buses de pulvérisation et les conduits d'alimentation desdites buses. Les différents tronçons de la rampe sont d'autre part généralement repliables afin de limiter l'encombrement de l'engin pendant les phases de transport ou de remisage.

On a proposé également dans le brevet FR-A-2 562 445, une rampe de pulvérisation dont la structure est en caisson creux délimité par un profil fermé dont la section transversale est régulière, dans lequel s'étend au moins une conduite d'alimentation des buses. En particulier, la poutre est constituée de deux profilés ouverts pourvus de bords plats boulonnés l'un sur l'autre et servant de base à la fixation des buses de pulvérisation ou encore d'un profilé fermé bord à bord par soudure.

De telles rampes de pulvérisation présentent de nombreux inconvénients. Tout d'abord, elles sont souvent trop lourdes du fait de la difficulté d'obtenir un compromis entre leur poids et leur rigidité structurelle. Il convient de préciser qu'outre la résistance mécanique pure, les déformations et les mouvements des rampes ont une incidence directe sur la répartition au sol des produits phytosanitaires.

Ensuite, elles sont coûteuses à mettre en oeuvre, en particulier, leur fabrication implique un grand nombre de composants et de nombreuses étapes, telles que l'assemblage ou la soudure d'un nombre élevé de profilés et de plaques de renfort, la fixation des buses, l'accrochage des conduits d'alimentation, et des différents accessoires.

Afin de pallier ces inconvénients, la présente invention a pour but de proposer une rampe de pulvérisation dont la structure est simplifiée et allégée tout en présentant les caractéristiques de rigidité requises et en étant d'un coût de fabrication plus avantageux.

A cet effet, l'invention a pour objet une rampe de pulvérisation comprenant au moins un bras constitué d'au moins un tronçon monopoutre, ladite poutre de chaque tronçon présentant une structure creuse et portant des buses de pulvérisation, caractérisé en ce que la poutre de chaque tronçon est constituée d'au moins un profilé métallique extrudé, ledit profilé définissant au moins des canaux intérieurs de circulation de fluides et de passage des circuits électriques ainsi que des moyens de support pour porter soit des buses de pulvérisation, soit des barillets porte-buses au droit des canaux transportant les fluides à pulvériser.

Ainsi de manière avantageuse, une rampe de pulvérisation selon l'invention présente une structure simplifiée puisque la poutre de chaque tronçon de bras de ladite rampe est conformée d'une seule pièce de manière à être plurifonctionnelle.

En effet, le profilé extrudé est réalisé de telle sorte qu'il définit à la fois les canaux de circulation des fluides et ceux de passage des circuits électriques, qu'il ne nécessite plus d'étapes d'assemblage de plusieurs pièces comme dans l'état de la technique lors de la fabrication de la poutre et qu'il comporte, de fabrication, des moyens simples de fixation des buses.

De préférence, le profilé métallique extrudé est un profilé en alliage d'aluminium extrudé. Ceci permet avantageusement d'alléger encore la rampe de pulvérisation obtenue.

De préférence, le profilé métallique présente une résistance mécanique supérieure aux sollicitations dynamiques liées au travail de la machine aux champs et des niveaux de déformation limités. Par conséquent, le profilé présente les caractéristiques de rigidité structurelle requises pour supporter lesdites sollicitations dynamiques. En effet la forme de la section transversale du profilé est choisie de telle sorte que la poutre ainsi formée présente tous les critères de rigidité requis, c'est-à-dire la rigidité verticale, horizontale, en torsion, etc. Cette forme est d'autre part ainsi faite qu'elle permet la fixation des systèmes de pulvérisation (buses ou porte buses), directement au droit des canaux transportant les produits phytosanitaires.

Au moins la face frontale du profilé est profilée de manière à conférer à la rampe un aérodynamisme performant propre à limiter, aux abords des buses de pulvérisation, les turbulences aérauliques générées par le vent et par l'avancement du pulvérisateur au champ.

Selon une forme de réalisation préférée de l'invention, le profilé métallique extrudé est conformé de sorte qu'une circulation d'air au sein dudit profilé est créée de manière à générer une assistance par courant d'air à la pulvérisation, le flux d'air d'assistance à la pulvérisation étant distribué au voisinage de chaque buse de pulvérisation. Ainsi, ce courant d'air permet d'améliorer le transport des gouttelettes en vol ainsi que leur pénétration dans la végétation tout en limitant la dérive au vent des plus fines gouttelettes. Le profilé peut en outre être conformé pour générer un effet venturi au voisinage de la buse.

La rampe de pulvérisation selon l'invention comprend un ou plusieurs tronçons reliés mécaniquement entre eux par des articulations classiques permettant le repliage de la rampe pendant les phases de transport et de remisage. Des liaisons tels que des tuyaux flexibles entre ces différents tronçons de rampe permettent de relier les canaux de circulation de produits phytosanitaires, des fluides hydrauliques ou pneumatiques, des câblages électriques et l'air circulant au sein du profilé.

De préférence, le profilé est également conformé pour permettre l'assemblage d'éléments structurels secondaires tels que des triangulations ou des barres de flèche pour câbles de rigidification.

Selon une autre forme de réalisation de l'invention, la poutre de chaque tronçon est constituée de deux profilés métalliques extrudés, assemblés.

On décrira maintenant l'invention plus en détail en référence au dessin dans lequel :
La figure 1 a représente une vue partielle arrière d'un pulvérisateur pourvu d'une rampe selon l'invention ;
La figure 1b représente une vue en perspective d'une rampe selon l'invention ;

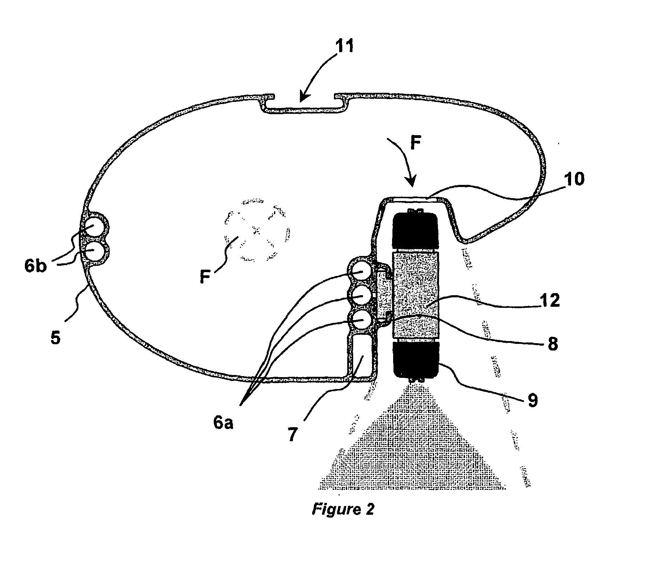

La figure 2 représente une vue en coupe d'un exemple de profilé selon l'invention lors d'une pulvérisation ;
Les figures 3, 4 et 5 représentent des vues en coupe de différents autres exemples de profilés constituant les tronçons d'une rampe selon l'invention ;
Les figures 6 et 7 représentent des vues en perspective de différents autres exemples de profilés constituant les tronçons d'une rampe selon l'invention ;
La figure 8 représente une vue en perspective d'une poutre de tronçon selon une forme de réalisation de l'invention ; et
La figure 9 représente une vue en perspective éclatée de la figure 8.

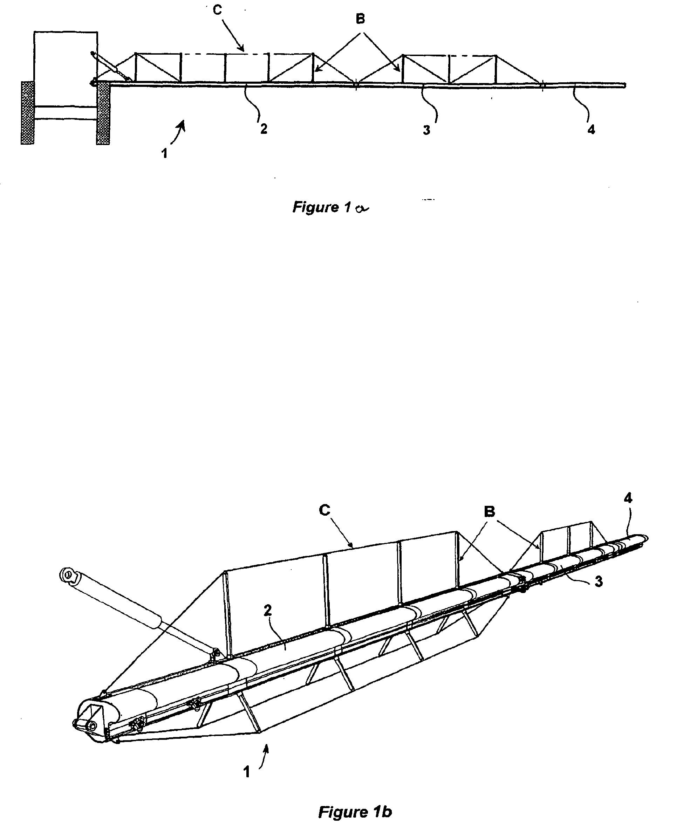

La moitié d'une rampe de pulvérisation est représentée aux figures 1 a et 1b et comprend un bras 1 constitué de trois tronçons monopoutres 2, 3 et 4. La tenue de cette demi-rampe peut être améliorée à l'aide de renforts par câbles de rigidification C montés sur des barres de flèche B.

Chaque poutre 2, 3 ou 4 est constituée d'un profilé en aluminium extrudé 5. Ce profilé 5 comporte des canaux intérieurs de circulation de fluides 6a pour la distribution aux buses de produits phytosanitaires et 6b pour distribuer le fluide hydraulique ou pneumatique aux actionneurs.

Des passages 7 pour les circuits électriques sont également définis par le profilé 5, ce qui permet d'obtenir une très bonne protection à la fois des circuits de puissance et des réseaux électroniques qui sont ainsi protégés des agressions possibles de l'environnement extérieur.

Des moyens de support 8 pour porter, soit les buses de pulvérisation 9, soit les barillets porte-buses 12 ou d'autres accessoires sont ménagés sur l'extérieur du profilé 5.

La forme du profilé 5 permet de conférer à la rampe toute la rigidité requise mais aussi un aérodynamisme performant propre à limiter aux abords des buses de pulvérisation 9, les turbulences aérauliques générées par le vent et par l'avancement du pulvérisateur au champ.

Le profilé 5 est en outre conformé de sorte qu'une circulation d'air au sein dudit profilé 5 est créée de manière à générer une assistance par courant d'air à la pulvérisation, le flux d'air d'assistance à la pulvérisation F étant distribué au voisinage d'une buse de pulvérisation 9.

Ainsi, une ouverture 10 est ménagée dans le profilé 5 au niveau de la buse de pulvérisation 9 pour distribuer un flux d'air F.

Le profilé 5 est également conformé pour permettre l'assemblage d'éléments structurels secondaires tels que des triangulations ou des barres de flèche B qui permettent d'améliorer encore la rigidité lorsque les rampes sont de grandes longueurs tel que représenté sur la figure 1 a ou 1 b.

Ainsi, des rainures, logements ou autres 11 peuvent être ménagés sur le profilé 5 pour recevoir un élément structurel secondaire.

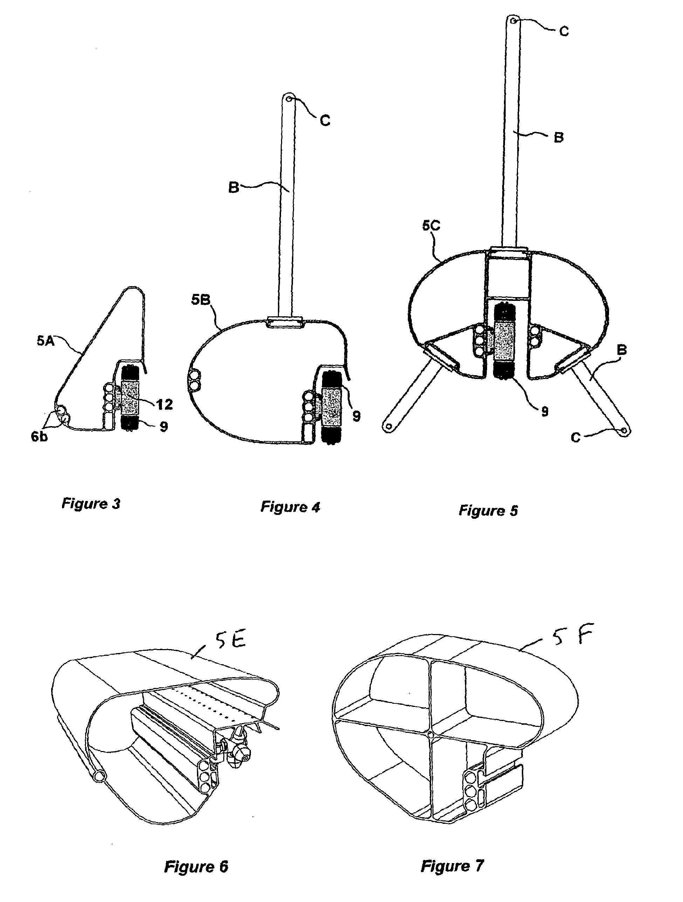

Les figures 3, 4, 5, 6 et 7 représentent cinq exemples de formes du profilé.

Le profilé 5A de la figure 3 est approprié pour constituer de petites rampes de pulvérisation ou des tronçons d'extrémité. Un tel profilé ne nécessite pas de renfort par câbles.

Le profilé 5B de la figure 4 sert à réaliser des rampes moyennes et grandes et il est conformé de manière à permettre une rigidification dans le plan vertical par câble.

Le profilé 5C représenté à la figure 5 est spécialement défini pour des rampes de très grandes longueurs, le profilé 5C offrant une possibilité de rigidification tridimensionnelle par câble.

Le profilé 5E représenté à la figure 6 sert à réaliser des rampes moyennes et grandes.

Le profilé 5F représenté à la figure 7 présente une structure déjà compartimentée.

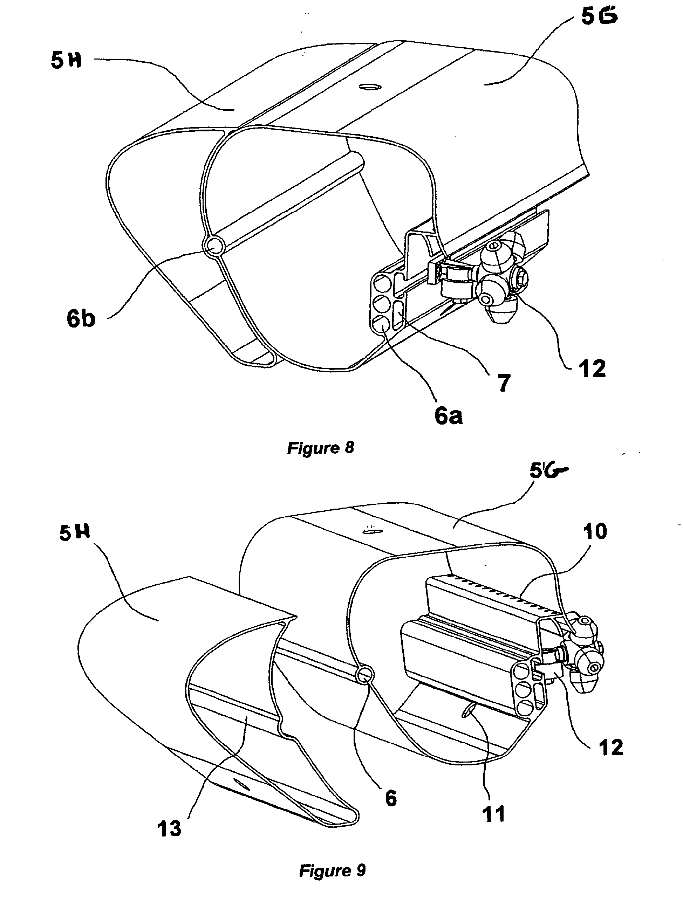

Le tronçon de poutre peut également être réalisé par assemblage de plusieurs profilés en alliage d'aluminium extrudés tels que représenté en figure 8 et 9 (sections 5G et 5H) afin que les dimensions extérieures de ceux-ci soient compatibles avec la capacité dimensionnelle des presses d'extrusion. Les différentes fonctions intégrées au profilé (canaux, supports buses et accessoires, etc.) pourront avantageusement être concentrées sur un seul profilé tel que représenté en figure 8 sur le profilé 5G ; qui pourra dans ce cas être utilisé seul ou conjointement avec la section 5H. Une variante pourra consister à répartir ces différentes fonctions entre les deux profilés 5G et 5H. L'assemblage des différents profilés pourra être réalisé avantageusement par une combinaison de liaisons mécaniques, par exemple en combinant une forme d'empreinte telle que représenté en figure 9 repère 13 (cylindrique, prismatique, queue d'aronde, etc.) et un collage structural ; ou tout autre moyen d'assemblage mécanique.

Ainsi, le bras de la rampe de pulvérisation est constitué d'un tronçon monopoutre, la poutre étant ici constituée de deux profilés métalliques extrudés.

## Revendications

1. Rampe de pulvérisation comprenant au moins un bras (1) constitué d'au moins un tronçon monopoutre (2, 3, 4), ladite poutre de chaque tronçon (2, 3, 4) présentant une structure creuse et portant des buses de pulvérisation (9),
**caractérisée en ce que** la poutre de chaque tronçon est constituée d'au moins un profilé métallique extrudé (5, 5A, 5B, 5C, 5E, 5F, 5G, 5H), ledit profilé (5, 5A, 5B, 5C, 5E, 5F, 5G, 5H) définissant au moins des canaux intérieurs de circulation de fluides (6a, 6b) et de passage des circuits électriques (7) ainsi que des moyens de support (8) pour porter soit des buses de pulvérisation (9), soit des barillets porte-buse (12) en regard avec certains canaux (6a).

2. Rampe selon la revendication 1,
**caractérisée en ce que** le profilé métallique présente une résistance mécanique supérieure aux sollicitations dynamiques liées au travail de la machine aux champs.

3. Rampe selon la revendication 1 et 2,
**caractérisée en ce que** le profilé métallique extrudé (5) est un profilé en alliage d'aluminium extrudé.

4. Rampe selon l'une des revendications 1 à 3,
**caractérisée en ce que** au moins la face frontale du profilé (5) est profilée de manière à conférer à la rampe un aérodynamisme performant propre à limiter, aux abords des buses de pulvérisation, les turbulences aérauliques générées par le vent et par l'avancement du pulvérisateur au champ.

5. Rampe selon l'une des revendications 1 à 4,
**caractérisée en ce que** le profilé métallique extrudé (5) est conformé de sorte qu'une circulation d'air au sein dudit profilé (5) est créée pour générer une assistance par courant d'air à la pulvérisation, le flux d'air d'assistance (F) étant distribué au voisinage de chaque buse de pulvérisation (9).

6. Rampe selon l'une des revendications 1 à 5,
**caractérisée en ce que** le profilé (5) est également conformé pour permettre l'assemblage d'éléments structurels secondaires tels que des triangulations ou des barres de flèches (B) pour câbles de rigidification (C).

7. Rampe selon l'une des revendications 1 à 6,
**caractérisée en ce que** la poutre de chaque tronçon est constituée de deux profilés métalliques extrudés (5G, 5H), assemblés.

## Claims

1. A spray bar, comprising at least one arm (1) consisting of at least one single-beam section (2, 3, 4), said beam of each section (2, 3, 4) having a hollow structure and carrying spraying nozzles (9),
**characterized in that** the beam of each section consists of at least one extruded metal profile (5, 5A, 5B, 5C, 5E, 5F, 5G, 5H), said profile (5, 5A, 5B, 5C, 5E, 5F, 5G, 5H) defining at least interior channels for flowing fluids (6a, 6b) and for passing electric circuitry (7), as well as supporting means (8) for carrying either spraying nozzles (9) or nozzle-holding barrels (12) opposite certain channels (6a).

2. The bar according to claim 1, **characterized in that** the metal profile has greater mechanical resistance to dynamic loads related to the operation of the machine in the fields.

3. The bar according to claims 1 and 2, **characterized in that** extruded metal profile (5) is an extruded aluminum alloy profile.

4. The bar according to any of claims 1 to 3, **characterized in that** at least the front face of the profile (5) is profiled so as to give the bar high-performance aerodynamics adapted to limit near the spraying nozzles the ventilation turbulences generated by the wind and the advance of the sprayer in the field.

5. The bar according to any of claims 1 to 4, **characterized in that** the extruded metal profile (5) is shaped so that an air flow inside said profile (5) is created so as to generate airflow-assisted spraying, the assisting airflow (F) being distributed near each spraying nozzle (9).

6. The bar according to any of claims 1 to 5, **characterized in that** the profile (5) is also shaped to allow for the assembly of secondary structural elements such as stabilizers or cantilever arms (B) for stiffening cables (C).

7. The bar according to any of claims 1 to 6, **characterized in that** the beam of each section consists of two assembled extruded metal profiles (5G, 5H).

## Patentansprüche

1. Spritzgestänge, umfassend mindestens einen Arm (1), der aus mindestens einem Teilstück (2, 3, 4) mit einem Träger besteht, wobei der Träger jedes Teilstücks (2, 3, 4) eine Hohlstruktur aufweist und Spritzdüsen (9) trägt,
**dadurch gekennzeichnet, dass** der Träger jedes Teilstücks aus mindestens einem Metallstrangpressprofil (5, 5A, 5B, 5C, 5E, 5F, 5G, 5H) besteht, wobei das Profil (5, 5A, 5B, 5C, 5E, 5F, 5G, 5H) mindestens Innenkanäle zum Umlaufen von Fluiden (6a, 6b) und zum Durchführen der elektrischen Schaltkreise (7) sowie Stützmittel (8) zum Tragen entweder von Spritzdüsen (9) oder von Düsenhalterzylindern (12) gegenüber bestimmten Kanälen (6a) definiert.

2. Gestänge nach Anspruch 1, **dadurch gekennzeichnet, dass** das Metallprofil eine größere mechanische Festigkeit gegenüber dynamischen Beanspruchungen, die mit dem Betrieb der Maschine auf den Feldern zusammenhängt, aufweist.

3. Gestänge nach Anspruch 1 und 2, **dadurch gekennzeichnet, dass** das Metallstrangpressprofil (5) ein Profil aus extrudierter Aluminiumlegierung ist.

4. Gestänge nach einem der Ansprüche 1 bis 3, **dadurch gekennzeichnet, dass** mindestens die vordere Seite des Profils (5) derart profiliert ist, dass sie dem Gestänge eine leistungsstarke Aerodynamik verleiht, die dazu geeignet ist, um in der Nähe der Spritzdüsen die durch den Wind und die Fortbewegung des Spritzgeräts auf dem Feld erzeugten lufttechnischen Turbulenzen einzuschränken.

5. Gestänge nach einem der Ansprüche 1 bis 4, **dadurch gekennzeichnet, dass** das Metallstrangpressprofil (5) derart ausgestaltet ist, dass ein Luftumlauf im Innern des Profils (5) erzeugt wird, um beim Spritzen eine Hilfe durch Luftstrom zu erzeugen, wobei der Hilfsluftstrom (F) in der Nähe jeder Spritzdüse (9) verteilt wird.

6. Gestänge nach einem der Ansprüche 1 bis 5, **dadurch gekennzeichnet, dass** das Profil (5) auch ausgestaltet ist, um das Zusammenfügen von Nebenstrukturelementen, wie etwa von Seitenschienen oder Auslegern (B) für Versteifungskabel (C) zu ermöglichen.

7. Gestänge nach einem der Ansprüche 1 bis 6, **dadurch gekennzeichnet, dass** der Träger jedes Teilstücks aus zwei zusammengefügten Metallstrangpressprofilen (5G, 5H) besteht.
